(19)

**Europäisches Patentamt**
**European Patent Office**
**Office européen des brevets**

(11) **EP 4 650 189 A1**

(12) **EUROPEAN PATENT APPLICATION**

(43) Date of publication:
**19.11.2025 Bulletin 2025/47**

(21) Application number: **25176203.5**

(22) Date of filing: **13.05.2025**

(51) International Patent Classification (IPC):
**B60C 5/00** *(2006.01)* **B60C 11/03** *(2006.01)*
**B60C 19/00** *(2006.01)*

(52) Cooperative Patent Classification (CPC):
**B60C 5/00; B60C 11/0304; B60C 11/0306;**
**B60C 11/032; B60C 19/002;** B60C 11/12;
B60C 2011/0334; B60C 2011/0388; B60C 2200/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **14.05.2024 KR 20240063421**

(71) Applicant: **HANKOOK TIRE & TECHNOLOGY CO.,**
**LTD**
**Gyeonggi-do 13494 (KR)**

(72) Inventors:
• **Lim, Taehyung**
**34127 Yeseong-gu, Daejeon (KR)**
• **Gyoung, Minseok**
**34127 Yeseong-gu, Daejeon (KR)**

(74) Representative: **Witte, Weller & Partner**
**Patentanwälte mbB**
**Postfach 10 54 62**
**70047 Stuttgart (DE)**

(54) **HEAVY DUTY TIRE**

(57)      Disclosed is a heavy duty tire. The heavy duty tire including a tread contacting a road surface, a rib defined by a kerf formed in an axial direction of the tread and arranged at predetermined intervals in a circumferential direction of the tread, a groove formed in the circumferential direction of the tread and arranged at predetermined intervals in the axial direction of the tread, and a filter having a larger cross-sectional area than that of the groove and arranged on the groove at predetermined intervals in the circumferential direction of the tread, wherein the filter is provided in a quantity of one to three within a contact patch, which is a region where the tread contacts the road surface under a normal internal pressure and a normal load, and the quantity is defined based on a length of contact patch measured in the circumferential direction of the tread.

FIG. 2

EP 4 650 189 A1

**Description**

BACKGROUND

1. Field

The disclosure relates to a heavy duty tire, and more particularly, to a heavy duty tire capable of securing the rigidity of the tread while reducing noise.

2. Description of the Related Art

Generally, tires for vehicles serve to support the load of the vehicle, transmit driving and braking forces to the road surface, absorb shocks from the road, and help change and maintain the direction of the vehicle.

In such tires, the tread, which is the portion that directly contacts the road surface, typically includes grooves of various shapes formed on its surface. These grooves enhance braking and driving performance, improve steering stability, and further contribute to water drainage and heat dissipation. Additionally, they help reduce external noise generated when the tire comes into contact with the road surface.

Meanwhile, heavy duty tires, which are designed for large vehicles such as trucks, buses, vans, large pickup trucks, and other commercial vehicles, must be constructed to ensure high rigidity of the tread. However, applying various groove patterns to the tread surface of such tires is challenging due to the need to maintain tread stiffness.

Accordingly, heavy duty tires, compared to general-purpose vehicle tires, often face difficulties in reducing external noise caused by the contact between the tire and the road surface.

SUMMARY

It is an embodiment of the disclosure to provide a heavy duty tire that is capable of securing tread rigidity while simultaneously reducing external noise generated when the tire contacts a road surface, through an improved tread structure.

Additional aspects of the disclosure will be set forth in part in the description which follows and, in part, will be obvious from the description, or may be learned by practice of the disclosure.

In accordance with an embodiment of the disclosure, there is provided a heavy duty tire including a tread contacting a road surface, a rib defined by a kerf formed in an axial direction of the tread and arranged at predetermined intervals in a circumferential direction of the tread, a groove formed in the circumferential direction of the tread and arranged at predetermined intervals in the axial direction of the tread, and a filter having a larger cross-sectional area than that of the groove and arranged on the groove at predetermined intervals in the circumferential direction of the tread, wherein the filter is provided in a quantity of one to three within a contact patch, which is a region where the tread contacts the road surface under a normal internal pressure and a normal load, and the quantity is defined based on a length of contact patch measured in the circumferential direction of the tread.

The kerf is formed to be inclined at a predetermined angle with respect to the axial direction of the tread.

The filter is formed such that its width gradually decreases in a depth direction of the tread from a surface of the tread toward a rotation axis of the tread.

A minimum width of the filter formed in the axial direction of the tread is at least 150% greater than a width of the groove formed in the axial direction of the tread, and a maximum width of the filter in the axial direction is not more than 50% of a width of the rib formed in the axial direction of the tread.

A maximum length of the filter formed in the circumferential direction of the tread is less than or equal to 50% of the length of contact patch.

A length of the filter formed in the circumferential direction of the tread exceeds a pitch length, which is defined as an interval between adjacent kerfs in the circumferential direction of the tread, by more than 5 mm.

The filter and the groove are formed at the same height in a depth direction of the tread from a surface of the tread toward a rotation axis of the tread.

A first frequency value (fc), defined by the filter and expressed by Equation 1 below, is smaller than a second frequency value (fp), defined by a pattern formed by the rib in the circumferential direction of the tread and expressed by Equation 2 below:

$$[\text{Equation 1}] \quad f_c = (C \times S) / (\pi \times L1 \times (S1 - S))$$

where fc is the first frequency (Hz), C is a speed (mm/s) of air introduced into the groove by rotation of the tire, S is a cross-

sectional area (mm$^2$) of the groove, $\pi$ is pi, L1 is a length (mm) of the filter, and S1 is a cross-sectional area (mm$^2$) of the filter.

$$[\text{Equation 2}]\ fp = (1000 \times V \times N) / (3.6 \times 2 \times \pi \times R)$$

where fp is the second frequency (Hz), V is a rotation speed (km/h) of the tire, N is a total number of pitch intervals (ea) defined by the kerfs in the circumferential direction of the tread, and R is a radius (mm) of the tire.

A first frequency value (fc), defined by the filter and expressed by Equation 1, is smaller than a third frequency value (fL), which is defined by the contact patch and expressed by Equation 3 below:

$$[\text{Equation 1}]\ fc = (C \times S) / (\pi \times L1 \times (S1 - S))$$

(variables as previously defined)

$$[\text{Equation 3}]\ fL = C / (2 \times L0)$$

where fL is the third frequency (Hz), C is a speed (mm/s) of air introduced into the groove by rotation of the tire, and L0 is the length of contact patch (mm).

A first frequency value (fc), defined by the filter and expressed by Equation 1, is greater than a second frequency value (fp), defined by a pattern formed by the rib in the circumferential direction of the tread and expressed by Equation 2, and is less than twice the second frequency value (fp).

$$[\text{Equation 1}]\ fc = (C \times S) / (\pi \times L1 \times (S1 - S))$$

where fc is the first frequency (Hz), C is a speed (mm/s) of air introduced into the groove by rotation of the tire, S is a cross-sectional area (mm$^2$) of the groove, $\pi$ is pi, L1 is a length (mm) of the filter, and S1 is a cross-sectional area (mm$^2$) of the filter.

$$[\text{Equation 2}]\ fp = (1000 \times V \times N) / (3.6 \times 2 \times \pi \times R)$$

where fp is the second frequency (Hz), V is a rotation speed (km/h) of the tire, N is a total number of pitch intervals (ea) defined by the kerfs in the circumferential direction of the tread, and R is a radius (mm) of the tire.

BRIEF DESCRIPTION OF THE DRAWINGS

These and/or other aspects of the disclosure will become apparent and more readily appreciated from the following description of the embodiments, taken in conjunction with the accompanying drawings of which:

FIG. 1 is a perspective view showing the overall appearance of a heavy duty tire according to an embodiment of the present invention.

FIG. 2 is a top view showing a portion of the tread of a heavy duty tire according to an embodiment of the present invention.

FIG. 3 is another top view showing a portion of the tread of a heavy duty tire according to an embodiment of the present invention.

FIG. 4A and 4B are cross-sectional views taken along line A-A' and line B-B', respectively, in FIG. 3.

DETAILED DESCRIPTION

Hereinafter, embodiments of the disclosure will be described in detail with reference to the accompanying drawings. The following embodiments are provided to sufficiently transfer the concepts of the disclosure to one of ordinary skill in the technical art to which the disclosure belongs. However, the disclosure is not limited to these embodiments and may be embodied in another form. In the drawings, parts that are irrelevant to the descriptions may not be shown in order to clarify the disclosure, and also, for easy understanding, the sizes of components are more or less exaggeratedly shown.

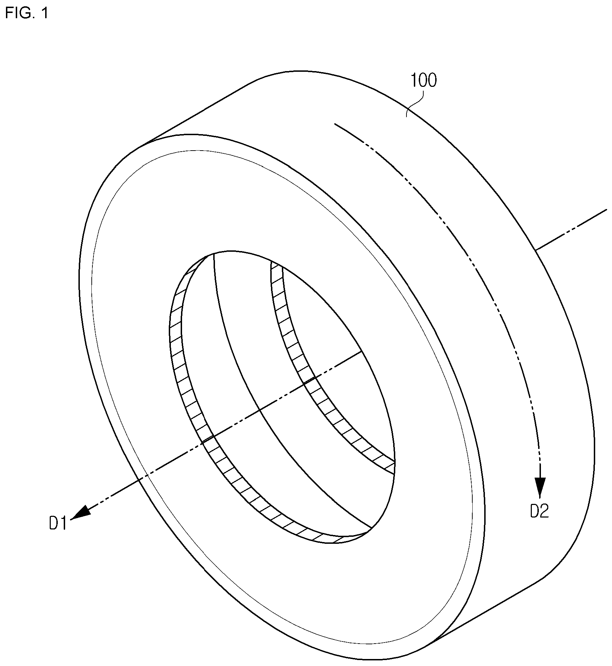

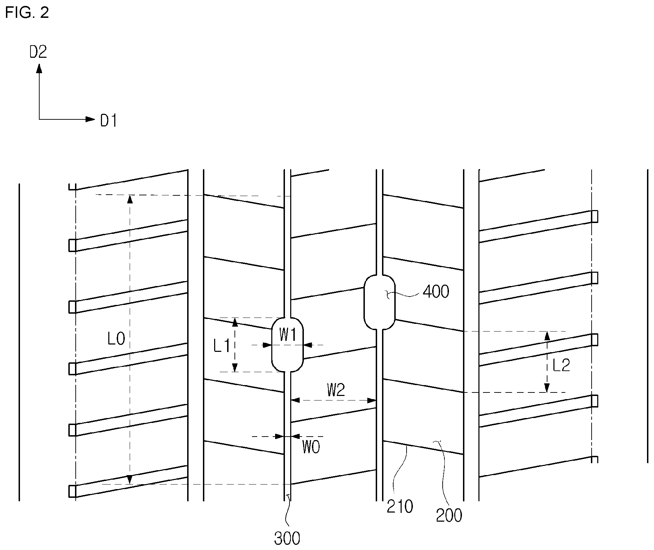

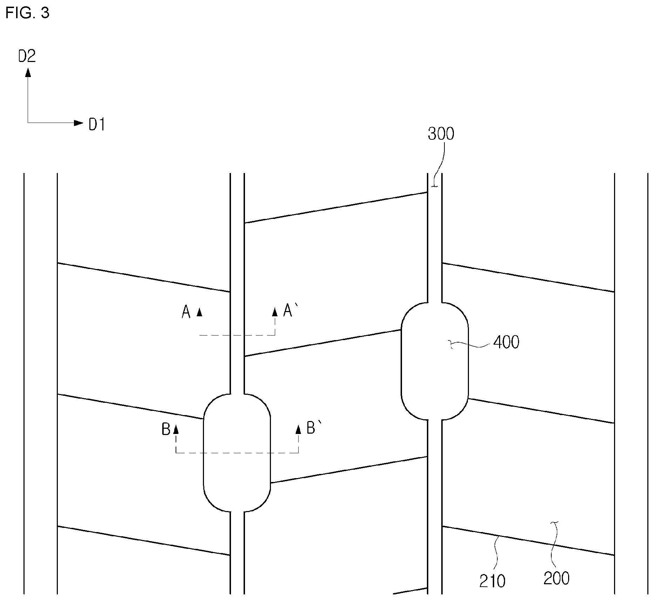

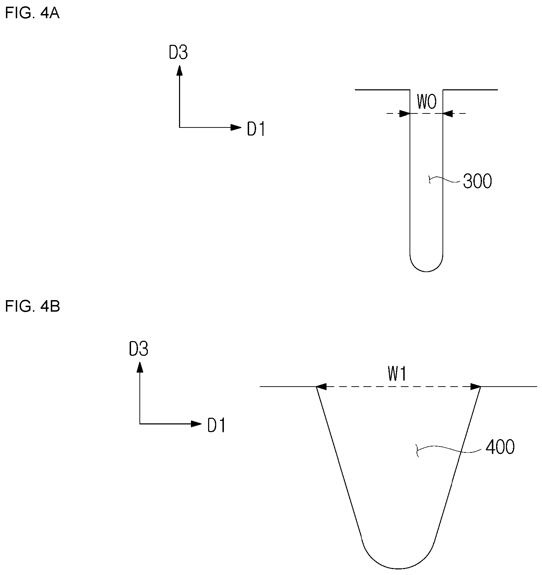

FIG. 1 is a perspective view showing the overall appearance of a heavy duty tire according to an embodiment of the present invention, FIG. 2 is a top view showing a portion of the tread of a heavy duty tire according to an embodiment of the present invention, FIG. 3 is another top view showing a portion of the tread of a heavy duty tire according to an embodiment of the present invention, FIG. 4A and 4B are cross-sectional views taken along line A-A' and line B-B', respectively, in FIG. 3.

Referring to FIGS. 1 to 4, the heavy duty tire according to an embodiment of the invention, which includes a tread (100), ribs (200) arranged in an axial direction (D1) of the tread (100) at predetermined intervals along a circumferential direction (D2) of the tread (100), grooves (300) arranged in the circumferential direction (D2) at predetermined intervals along the axial direction (D1), and filters (400) having a larger cross-sectional area than that of the grooves (300) and arranged at predetermined intervals in the circumferential direction (D2) on the grooves (300).

The tread (100), as shown in FIG. 1, is annular in shape and forms a surface that contacts the road to provide traction. The tread (100) may be made of various materials and shapes to ensure sufficient traction depending on road conditions. For example, the tread (100) may be made of rubber with high wear resistance and durability to withstand cuts and impacts.

In this specification, the axial direction (D1) refers to the direction along the rotation axis of the tire, the circumferential direction (D2) refers to the direction along the outer periphery of the tread, and the depth direction (D3) refers to the direction from the tread surface toward the tire's rotation axis. A "contact patch" refers to a region where the tread (100) contacts the road surface under normal inflation pressure and load, and the length of the contact patch refers to a length in the circumferential direction (D2) of the tread (100).

The ribs (200) are formed in the axial direction (D1) and are defined by kerfs (210) arranged at predetermined intervals in the circumferential direction (D2), thereby forming an overall tread pattern. The kerfs (210) are grooves formed from the surface of the tread (100) in the depth direction (D3), and they may be inclined with respect to the axial direction (D1) and arranged parallel to each other at fixed intervals in the circumferential direction (D2), forming a repeating pattern. A pitch is defined as a repeating unit formed by the ribs (200) in the circumferential direction (D2), and, as shown in FIG. 2, the interval between adjacent kerfs (210) is defined as the pitch length (L2).

The ribs (200) may also be divided in the axial direction (D1) by the grooves (300). For example, as shown in FIGS. 2 and 3, the ribs (200) may be segmented into three pairs by two grooves (300).

The grooves (300) are deeper and wider than the kerfs (210) and are formed as recessed portions from the tread (100) surface in the depth direction (D3). As shown in FIGS. 2 and 3, the grooves (300) are formed in the circumferential direction (D2) and arranged at predetermined intervals along the axial direction (D1). For heavy duty tires, the grooves (300) may have a smaller cross-sectional area than those of passenger vehicle tires in order to maintain tread (100) rigidity. As shown in FIG. 4A, each groove (300) may have a constant groove width (W0) in the depth direction (D3).

The filters (400) are formed to have a larger cross-sectional area than that of the grooves (300) and are arranged on the grooves (300) at predetermined intervals in the circumferential direction (D2). The filters (400) serve as acoustic low-pass filters by forming a sudden expansion in cross-sectional area when air passes through a duct defined by the groove (300) during tire rotation while contacting the road surface.

More specifically, as shown in FIG. 4B, the filters (400) may be formed such that their width gradually decreases along the depth direction (D3). The height of the filters (400) in the depth direction (D3) may be the same as the height of the grooves (300).

The filters (400) may be provided in a quantity of one to three within the contact patch, which is defined in the circumferential direction (D2) of the tread (100) under normal pressure and load. If four or more filters (400) are provided within the contact patch, the duct formed by the filters (400) may exhibit characteristics similar to those of the groove (300), thereby losing the acoustic low-pass filtering effect.

The filters (400) may have a minimum width in the axial direction (D1) that is at least 150% greater than the groove width (W0) and a maximum width that is not more than 50% of the rib width (W2). If the filter width (W1) is less than 150% of the groove width (W0), the difference in cross-sectional area between the groove (300) and the filter (400) becomes too small to exhibit the acoustic filtering effect. Conversely, if the filter width (W1) exceeds 50% of the rib width (W2), tread (100) rigidity may be significantly reduced.

The maximum length of the filter (400) in the circumferential direction (D2) may be less than or equal to 50% of the length of the contact patch (L0). If the length (L1) of the filter (400) exceeds 50% of the length of the contact patch (L0), the filter (400) may lose its acoustic filtering function by acting as an extension of the groove (300).

The filter (400) may also have a length in the circumferential direction (D2) that exceeds the pitch length (L3) defined as the interval between adjacent kerfs (210) by more than 5 mm.

Accordingly, in a heavy duty tire according to the present invention, the filter (400) passes noise having a frequency lower than a certain threshold while significantly attenuating noise of higher frequencies.

Due to the shapes and characteristics of the ribs (200), grooves (300), and filters (400), the acoustic frequency characteristics caused by air entering the ducts formed within the contact patch during tire rotation may be explained as follows.

A first frequency value (fc) defined by the filter (400) can be expressed by Equation 1:

$$[\text{Equation 1}]\ fc = (C \times S) / (\pi \times L1 \times (S1 - S))$$

where fc is the first frequency (Hz), C is a speed (mm/s) of air introduced into the groove by rotation of the tire, S is a cross-sectional area (mm$^2$) of the groove, $\pi$ is pi, L1 is a length (mm) of the filter, and S1 is a cross-sectional area (mm$^2$) of the filter.

A second frequency value (fp) defined by the pattern of ribs (200) in the circumferential direction (D2) of the tread (100) can be expressed by Equation 2:

$$[\text{Equation 2}]\ fp = (1000 \times V \times N) / (3.6 \times 2 \times \pi \times R)$$

where fp is the second frequency (Hz), V is a rotation speed (km/h) of the tire, N is a total number of pitch intervals (ea) defined by the kerfs in the circumferential direction of the tread, and R is a radius (mm) of the tire.

A third frequency value (fL) defined by the contact patch can be expressed by Equation 3:

$$[\text{Equation 3}]\ fL = C / (2 \times L0)$$

where fL is the third frequency (Hz), C is a speed (mm/s) of air introduced into the groove by rotation of the tire, and L0 is the length of contact patch (mm).

The first frequency value (fc) must be smaller than the second frequency value (fp). It must also be smaller than the third frequency value (fL). However, when it is difficult to make the first frequency value (fc) smaller than both the second (fp) and third (fL) frequency values, the first frequency value (fc) may be greater than the second frequency value (fp) but less than twice the value of the second frequency value (fp).

Thus, the heavy duty tire according to the present invention can improve tread (100) rigidity and simultaneously reduce external noise generated by road contact, thereby contributing to a more comfortable driving experience and road environment.

So far, detailed embodiments of the heavy duty tire according to the disclosure have been described. However, it is obvious that various modifications may be made without departing from the scope of the disclosure.

Therefore, the scope of the disclosure should not be limited to the above-described embodiments, but should be defined not only by the claims which will be described below but also by equivalents of the claims.

Thus, it should be understood that the embodiments described above are merely for illustrative purposes and not for limitation purposes in all aspects. The scope of the disclosure is defined by the claims which will be described below rather than by the detailed description, and all changes or modifications derived from the meaning and scope of the claims and their equivalent concepts should be interpreted as being included in the scope of the disclosure.

**Claims**

1. A heavy duty tire comprising:

   a tread contacting a road surface;
   a rib defined by a kerf formed in an axial direction of the tread and arranged at predetermined intervals in a circumferential direction of the tread;
   a groove formed in the circumferential direction of the tread and arranged at predetermined intervals in the axial direction of the tread; and
   a filter having a larger cross-sectional area than that of the groove and arranged on the groove at predetermined intervals in the circumferential direction of the tread,
   wherein the filter is provided in a quantity of one to three within a contact patch, which is a region where the tread contacts the road surface under a normal internal pressure and a normal load, and the quantity is defined based on a length of contact patch measured in the circumferential direction of the tread.

2. The heavy duty tire according to claim 1,
   wherein the kerf is formed to be inclined at a predetermined angle with respect to the axial direction of the tread.

3. The heavy duty tire according to claim 1,
   wherein the filter is formed such that its width gradually decreases in a depth direction of the tread from a surface of the tread toward a rotation axis of the tread.

4. The heavy duty tire according to claim 3,

wherein a minimum width of the filter formed in the axial direction of the tread is at least 150% greater than a width of the groove formed in the axial direction of the tread,
and a maximum width of the filter in the axial direction is not more than 50% of a width of the rib formed in the axial direction of the tread.

5. The heavy duty tire according to claim 4,
wherein a maximum length of the filter formed in the circumferential direction of the tread is less than or equal to 50% of the length of contact patch.

6. The heavy duty tire according to claim 1,
wherein a length of the filter formed in the circumferential direction of the tread exceeds a pitch length, which is defined as an interval between adjacent kerfs in the circumferential direction of the tread, by more than 5 mm.

7. The heavy duty tire according to claim 1,
wherein the filter and the groove are formed at the same height in a depth direction of the tread from a surface of the tread toward a rotation axis of the tread.

8. The heavy duty tire according to claim 1,

wherein a first frequency value (fc), defined by the filter and expressed by Equation 1 below,
is smaller than a second frequency value (fp), defined by a pattern formed by the rib in the circumferential direction of the tread and expressed by Equation 2 below:

$$[\text{Equation 1}] \; fc = (C \times S) / (\pi \times L1 \times (S1 - S))$$

where fc is the first frequency (Hz), C is a speed (mm/s) of air introduced into the groove by rotation of the tire, S is a cross-sectional area ($mm^2$) of the groove, $\pi$ is pi, L1 is a length (mm) of the filter, and S1 is a cross-sectional area ($mm^2$) of the filter.

$$[\text{Equation 2}] \; fp = (1000 \times V \times N) / (3.6 \times 2 \times \pi \times R)$$

where fp is the second frequency (Hz), V is a rotation speed (km/h) of the tire, N is a total number of pitch intervals (ea) defined by the kerfs in the circumferential direction of the tread, and R is a radius (mm) of the tire.

9. The heavy duty tire according to claim 1,

wherein a first frequency value (fc), defined by the filter and expressed by Equation 1,
is smaller than a third frequency value (fL), which is defined by the contact patch and expressed by Equation 3 below:

$$[\text{Equation 1}] \; fc = (C \times S) / (\pi \times L1 \times (S1 - S))$$

(variables as previously defined)

$$[\text{Equation 3}] \; fL = C / (2 \times L0)$$

where fL is the third frequency (Hz), C is a speed (mm/s) of air introduced into the groove by rotation of the tire, and L0 is the length of contact patch (mm).

10. The heavy duty tire according to claim 1,

wherein a first frequency value (fc), defined by the filter and expressed by Equation 1,

is greater than a second frequency value (fp), defined by a pattern formed by the rib in the circumferential direction of the tread and expressed by Equation 2,
and is less than twice the second frequency value (fp).

$$[\text{Equation 1}] \quad fc = (C \times S) / (\pi \times L1 \times (S1 - S))$$

where fc is the first frequency (Hz), C is a speed (mm/s) of air introduced into the groove by rotation of the tire, S is a cross-sectional area ($mm^2$) of the groove, $\pi$ is pi, L1 is a length (mm) of the filter, and S1 is a cross-sectional area ($mm^2$) of the filter.

$$[\text{Equation 2}] \quad fp = (1000 \times V \times N) / (3.6 \times 2 \times \pi \times R)$$

where fp is the second frequency (Hz), V is a rotation speed (km/h) of the tire, N is a total number of pitch intervals (ea) defined by the kerfs in the circumferential direction of the tread, and R is a radius (mm) of the tire.

FIG. 1

FIG. 2

FIG. 3

FIG. 4A

FIG. 4B

Europäisches
Patentamt

European
Patent Office

Office européen
des brevets

## EUROPEAN SEARCH REPORT

**Application Number**

EP 25 17 6203

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | US 2022/063344 A1 (YAMAMOTO TETSUYA [JP])<br>3 March 2022 (2022-03-03)<br>* paragraph [0006] *<br>* paragraph [0019] - paragraph [0027] *<br>* paragraph [0052] *<br>* paragraph [0061] *<br>* figures * | 1-3,5,7<br><br>4,6,8-10 | INV.<br>B60C5/00<br>B60C11/03<br>B60C19/00 |
| X<br><br><br>A | WO 2017/176280 A1 (MICHELIN & CIE [FR];<br>ZHU FANG [US] ET AL.)<br>12 October 2017 (2017-10-12)<br>* paragraph [0001] - paragraph [0003] *<br>* paragraph [0044] - paragraph [0053] *<br>* paragraph [0060] - paragraph [0065] *<br>* figures * | 1-5,7<br><br><br>6,8-10 | |
| X | US 2014/299242 A1 (CHAUVIN DOMINIQUE [FR])<br>9 October 2014 (2014-10-09)<br>* paragraph [0057] - paragraph [0061] *<br>* figures * | 1,2,4,5,<br>7 | |
| X | EP 4 364 972 A1 (SUMITOMO RUBBER IND [JP])<br>8 May 2024 (2024-05-08)<br>* paragraph [0045] - paragraph [0049] *<br>* paragraph [0092] - paragraph [0098] *<br>* paragraph [0106] - paragraph [0107] *<br>* figures 1, 3, 4 * | 1-5,7 | TECHNICAL FIELDS<br>SEARCHED (IPC)<br><br>B60C |
| X | EP 2 379 352 A1 (MICHELIN SOC TECH [FR];<br>MICHELIN RECH TECH [CH])<br>26 October 2011 (2011-10-26)<br>* paragraph [0001] - paragraph [0004] *<br>* paragraph [0041] *<br>* paragraph [0048] - paragraph [0052] *<br>* figures 7-8 * | 1,2,4,5,<br>7 | |

The present search report has been drawn up for all claims

| Place of search | Date of completion of the search | Examiner |
|---|---|---|
| Munich | 11 September 2025 | Avisse, Marylène |

EPO FORM 1503 03.82 (P04C01)

## ANNEX TO THE EUROPEAN SEARCH REPORT
## ON EUROPEAN PATENT APPLICATION NO.

EP 25 17 6203

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2025

| Patent document cited in search report | | | Publication date | Patent family member(s) | | Publication date |
|---|---|---|---|---|---|---|
| US 2022063344 | A1 | | 03-03-2022 | CN | 114103558 A | 01-03-2022 |
| | | | | EP | 3960503 A1 | 02-03-2022 |
| | | | | JP | 7547863 B2 | 10-09-2024 |
| | | | | JP | 2022037668 A | 09-03-2022 |
| | | | | US | 2022063344 A1 | 03-03-2022 |
| WO 2017176280 | A1 | | 12-10-2017 | AU | 2017248325 A1 | 25-10-2018 |
| | | | | CN | 109070651 A | 21-12-2018 |
| | | | | EP | 3439899 A1 | 13-02-2019 |
| | | | | JP | 6820941 B2 | 27-01-2021 |
| | | | | JP | 2019510681 A | 18-04-2019 |
| | | | | US | 2020298625 A1 | 24-09-2020 |
| | | | | WO | 2017176280 A1 | 12-10-2017 |
| | | | | WO | 2017177132 A1 | 12-10-2017 |
| US 2014299242 | A1 | | 09-10-2014 | BR | 112014001581 A2 | 21-02-2017 |
| | | | | CA | 2841894 A1 | 31-01-2013 |
| | | | | CN | 103717412 A | 09-04-2014 |
| | | | | EP | 2736735 A1 | 04-06-2014 |
| | | | | FR | 2978377 A1 | 01-02-2013 |
| | | | | JP | 6074424 B2 | 01-02-2017 |
| | | | | JP | 2014521548 A | 28-08-2014 |
| | | | | US | 2014299242 A1 | 09-10-2014 |
| | | | | WO | 2013014253 A1 | 31-01-2013 |
| EP 4364972 | A1 | | 08-05-2024 | EP | 4364972 A1 | 08-05-2024 |
| | | | | JP | 2024066540 A | 16-05-2024 |
| EP 2379352 | A1 | | 26-10-2011 | CN | 102256812 A | 23-11-2011 |
| | | | | EA | 201170864 A1 | 30-12-2011 |
| | | | | EP | 2379352 A1 | 26-10-2011 |
| | | | | FR | 2940185 A1 | 25-06-2010 |
| | | | | JP | 5583686 B2 | 03-09-2014 |
| | | | | JP | 2012513328 A | 14-06-2012 |
| | | | | US | 2011277898 A1 | 17-11-2011 |
| | | | | WO | 2010072523 A1 | 01-07-2010 |

EPO FORM P0459

For more details about this annex : see Official Journal of the European Patent Office, No. 12/82